# EUROPÄISCHE PATENTSCHRIFT

(11) **EP 0 412 373 B1**
(45) Veröffentlichungstag und Bekanntmachung des Hinweises auf die Patenterteilung: **08.06.1994**
(21) Anmeldenummer: 90114469.1
(22) Anmeldetag: 27.07.1990
(51) Int. Cl.: B65G 47/91, B66C 1/02

(54) **Vorrichtung zum Fördern von Lagen aus einer Mehrzahl von Einzelgegenständen**
Handling device for layers of several articles
Dispositif de manutention pour nappes constituées de plusieurs articles

(30) Priorität: 08.08.1989 DE 3926121
(43) Veröffentlichungstag der Anmeldung: 13.02.1991
(73) Patentinhaber: Focke & Co. (GmbH & Co.), 27283 Verden (DE)
(72) Erfinder: Focke, Heinz, D-2810 Verden (DE); Holloch, Johannes, D-2815 Langwedel (DE)
(74) Vertreter: Bolte, Erich, Dipl.-Ing.

(56) Entgegenhaltungen:
- DD-A- 209 424
- DE-A- 2 258 007
- US-A- 3 780 884
- US-A- 4 787 662

## Beschreibung

Die Erfindung betrifft eine Vorrichtung zum Fördern von Lagen aus einer Mehrzahl von Einzelgegenständen, insbesondere Gläsern oder Dosen, vorzugsweise zum Be- und Entladen von Paletten, wobei zum Aufnehmen einer Lage von Einzelgegenständen ein Saugkopf vorgesehen ist, der eine Vielzahl von Saugbohrungen aufweist, die einerseits der Oberseite der Gegenstände zugewandt und andererseits über Strömungskanäle an eine gemeinsame Saugkammer mit Unterdruckquelle angeschlossen sind. Eine solche Vorrichtung ist aus der US-A-4 787 662 bekannt.

Unter Fördern wird in diesem Zusammenhang sowohl das Heben als auch das Transportieren sowie das Absetzen von Lagen aus einer Mehrzahl von Einzelgegenständen verstanden.

Die Erfindung befaßt sich mit dem lagenweisen Palettieren bzw. Depalettieren von Einzelgegenständen. Hierzu wird üblicherweise von einem Palettierer mit Saugkopf Gebrauch gemacht, wobei die Gegenstände mittels Saugluft an ihrer Oberseite erfaßt werden. Üblicherweise ist der Saugkopf für einen solchen Palettierer so ausgebildet, daß eine Vielzahl von Saugbohrungen an eine gemeinsame Saugkammer mit Unterdruckquelle angeschlossen ist. Die Unterdruckquelle ist so ausgelegt, daß bei verhältnismäßig geringem Unterdruck keine große Luftmenge gefördert wird. Häufig ist zugleich an der Unterseite eine elastische Polsterschicht angeordnet, die sich unter gewissem Zusammendrücken an die Oberseite der anzuhebenden Gegenstände anlegt und dabei dafür sorgt, daß der Unterdruck auch tatsächlich an der Oberseite der Gegenstände zur Einwirkung kommt.

Selbstverständlich muß der Saugkopf mindestens so viele Saugbohrungen aufweisen, wie Einzelgegenstände innerhalb einer Lage vorgesehen sind. Da jedoch die Einzelgegenstände innerhalb einer Lage häufig nicht absolut genau ausgerichtet sind bzw. die Relativstellung der Einzelgegenstände innerhalb der Lage nicht genau der Anordnung der Saugbohrungen im Saugkopf entspricht, ist für eine ordnungsgemäße Erfassung aller Einzelgegenstände einer Lage eine verhältnismäßig große Anzahl kleiner Saugbohrungen vorzusehen, und zwar in einer solchen Teilung, daß die Oberseite eines Einzelgegenstandes stets im Bereich mindestens einer Saugbohrung liegt. Dies führt andererseits dazu, und vor allem bei runden Einzelgegenständen, daß einzelnen Saugbohrungen kein Einzelgegenstand zugeordnet ist und daher über diese "freien" Saugbohrungen Umgebungsluft angesaugt wird. Ist dies bei mehreren Saugbohrungen der Fall, so bricht der Unterdruck zusammen. Damit ist eine ordnungsgemäße Erfassung der Einzelgegenstände einer Lage nicht mehr möglich.

Zur Vermeidung dieses Nachteils ist bereits vorgeschlagen worden, den Strömungsquerschnitt derjenigen Saugbohrungen, denen im Einzelfall kein Einzelgegenstand zugeordnet ist, zu reduzieren, um so über diese "freien" Saugbohrungen möglichst wenig Luft aus der Umgebung anzusaugen. Hierzu sind Ventile im Bereich aller Saugbohrungen vorgesehen, die bei entsprechenden Druckverhältnissen die Saugbohrungen teilweise verschließen, um so ihren Querschnitt zu reduzieren. Diese Ausbildung ist jedoch wegen der Vorsehung eines Ventils im Bereich jeder Saugbohrung sehr aufwendig. Im übrigen ist diese konstruktiv aufwendige Gestaltung verhältnismäßig störanfällig, insbesondere im Hinblick auf die Gefahr der Beeinträchtigung der Ventilwirkung durch in angesaugter Luft enthaltene Schmutzpartikel.

In anderer Weise zeigt die US-A-4 787 662 Saugbohrungen mit daran anschließenden, einen verringerten Querschnitt aufweisenden Strömungskanälen. Die Querschnitte sind so eng bemessen, daß es auch hier leicht zu einer Beeinträchtigung durch Verschmutzungen kommen kann. Außerdem sind Änderungen der Druck- und Strömungsverhältnisse nur durch Herstellung anderer Querschnitte möglich.

Der Erfindung liegt daher die Aufgabe zugrunde, die eingangs hinsichtlich ihrer Gattung bezeichnete Vorrichtung so zu gestalten, daß der Zusammenbruch des für die Erfassung der Einzelgegenstände einer Lage erforderlichen Unterdrucks infolge "freier" Saugbohrungen in einer Weise verhindert ist, die eine einfache Anpassung ermöglicht und nicht störanfällig ist.

Diese Aufgabe wird dadurch gelöst, daß sich die Strömungskanäle als Rohre oder Schläuche innerhalb der Saugkammer erstrecken und mit ihren freien Enden in der Saugkammer münden.

Infolge der erfindungsgemäß vorgesehenen Rohre oder Schläuche als Strömungskanäle weisen diese eine gewisse Länge auf. Ein zu einem Druckverlust führender Strömungswiderstand innerhalb der Strömungskanäle bzw. der anschliessenden Saugbohrungen ist die Folge. Dies wiederum bedeutet, daß der in der Saugkammer herrschende bzw. auf die Unterdruckquelle zurückgehende Unterdruck nicht in seiner ursprünglichen Größe am freien Ende der Saugbohrung herrscht und somit infolge des dort herrschenden geringeren Unterdrucks weniger Luft aus der Umgebung über die Saugbohrung und den Strömungskanal zur Unterdruckquelle bzw. Saugkammer hin angesaugt wird und damit der dort an sich bestehende Unterdruck in geringerem Ausmaß beeinträchtigt wird. Diese geringere Beeinträchtigung führt dazu, daß an den nicht-"freien" Saugbohrungen der nur gering beeinträchtigte Unterdruck herrscht und damit dort ordnungsgemäß Einzelgegenstände angehoben werden können. Der Einfluß der "freien" Saugbohrungen auf die Wirkung des Saugkopfs kann durch die erfindungsgemäße Ausbildung also so weit reduziert werden, daß die Wirksamkeit des Saugkopfs im Hinblick auf die Aufnahme aller Einzelgegenstände einer Lage nicht beeinträchtigt ist. Die als Strömungskanäle vorgesehenen Rohre oder Schläuche oder dergleichen können in die Saugbohrungen bei entsprechend weiterer Ausbildung derselben eingesteckt werden oder sind auf Ansätze der Saugbohrungen aufzustecken. Die Verwendung von Rohren bzw. Schläuchen stellt nicht nur eine preiswerte Gestaltung der Strömungskanäle dar, sondern ermöglicht den gegebenenfalls notwendigen Austausch bei Verstopfungen oder dergleichen in preiswerter und zeitsparender Weise. Ein besonderer Vorteil der innerhalb der Saugkammer sich erstreckenden Rohre oder Schläuche oder dergleichen besteht darin, daß nicht etwa der Druck der Umgebungsluft, sondern der in der Saugkammer wirksame Unterdruck auf die Rohre oder Schläuche von außen wirkt. Dadurch ist eine Deformierung der letzteren in Verbindung mit einer Querschnittsverengung und hieraus resultierender Verstopfung ausgeschlossen.

Für eine vorteilhafte Beeinflussung des Unterdrucks an den "freien" Saugbohrungen empfiehlt es sich, die Strömungskanäle so eng und so lang auszubilden, daß der bei ihrer Durchströmung durch ihre Enge und Länge bewirkte Druckabfall etwa einen bis zwei Drittel, vorzugsweise der Hälfte, des Unterdrucks der Unterdruckquelle bzw. Saugkammer entspricht. Hierdurch ist gewährleistet, daß an den "freien" Saugbohrungen lediglich ein so geringer Unterdruck herrscht, daß die in dessen Folge angesaugte Luftmenge so klein ist, daß zur Aufrechterhaltung des im übrigen erforderlichen Unterdrucks von der Unterdruckquelle aus keine sehr großen Luftmengen abgepumpt werden müssen, um die Wirksamkeit des Saugkopfs in der erforderlichen Weise aufrechtzuerhalten.

Eine zweckmäßige Dimensionierung der Strömungskanäle ist eine solche mit einem Innendurchmesser von 2 mm bis 6 mm, vorzugsweise 4 mm, und einer Länge von 10 cm bis 50 cm, vorzugsweise 30 cm. Berechnungen haben gezeigt, daß bei Verwendung von Strömungskanälen mit 4 mm Innendurchmesser und 30 cm Länge ein Unterdruck von 90 mm Wassersäule, entsprechend 0,09 bar, an den zum Anheben von Einzelgegenständen benutzten Saugbohrungen aufrechterhaltbar ist, ohne daß zu große Luftmengen von den "freien" Saugbohrungen über die Unterdruckluftquelle abgezogen werden müssen. Ein an den nicht-"freien" Saugbohrungen herrschender Unterdruck von 0,09 bar reicht im übrigen bei Einzelgegenständen mit runder Angriffsfläche für den Unterdruck bei einem Durchmesser von 100 mm für das Anheben von etwa 7 kg Masse je Einzelgegenstand aus.

Nachfolgend wird die Erfindung anhand von Zeichnungen näher erläutert. Es zeigen:
- Fig. 1: eine erfindungsgemäße Vorrichtung zusammen mit einem auf einer Palette abgesetzten Stapel aus mehreren Lagen von Einzelgegenständen und mit einer Fördereinrichtung zur Zu- bzw. Abführung einzelner Lagen von Einzelgegenständen,
- Fig. 2: die erfindungsgemäße Vorrichtung der Fig. 1 in Draufsicht unter gleichzeitiger Darstellung einer zweiten Palettenstation,
- Fig. 3: den Saugkopf der erfindungsgemäßen Vorrichtung in vertikalem Längsschnitt und

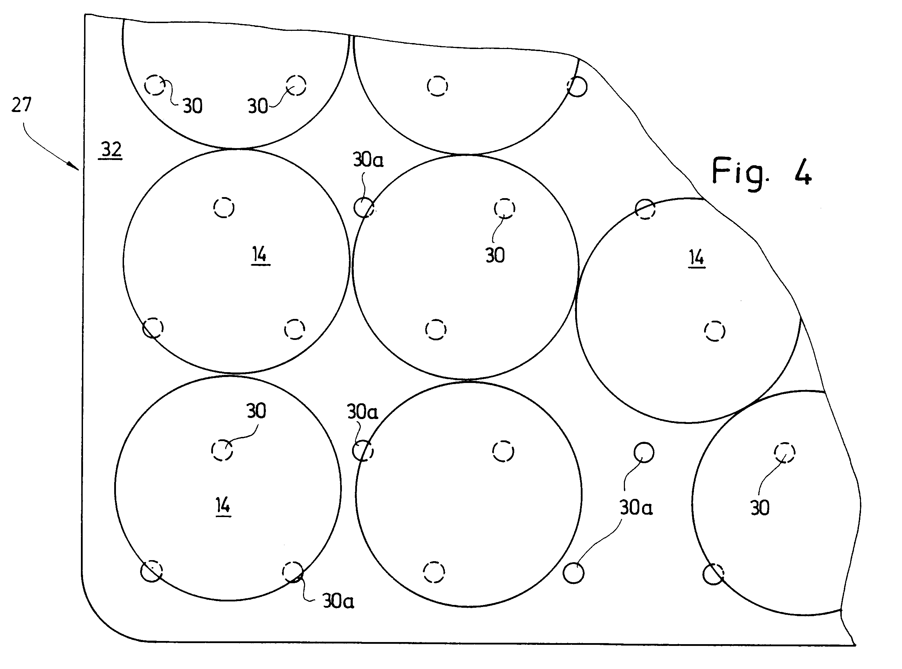

- Fig. 4: eine Teilansicht von unten auf den Saugkopf der Fig. 3 unter gleichzeitiger Darstellung der Einzelgegenstände einer Lage, wobei die Einzelgegenstände zumindest teilweise gegenüber ihrer Sollstellung verschoben sind.

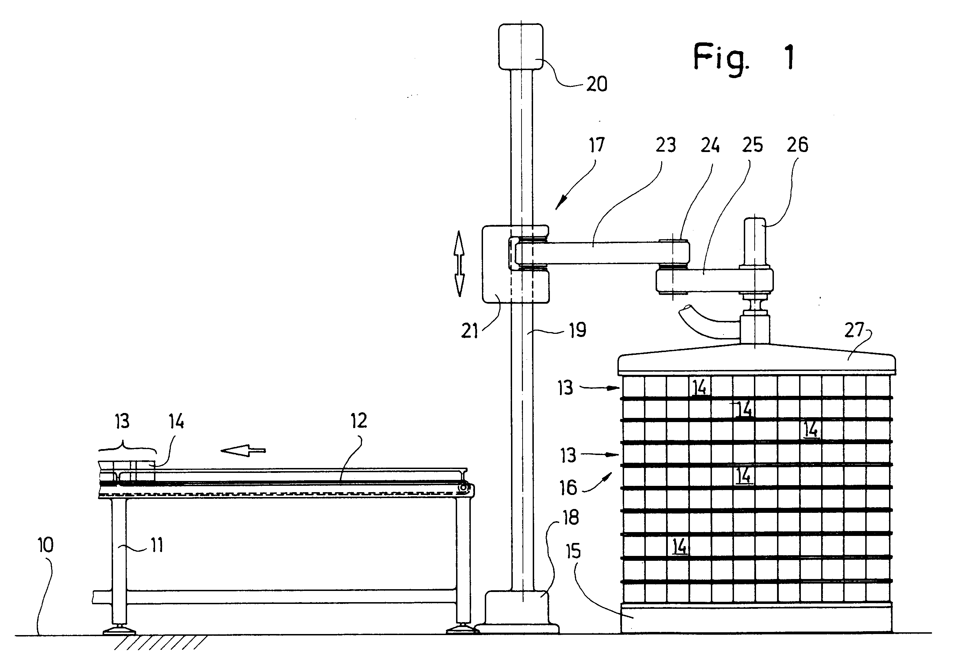

Fig. 1 zeigt im linken Teil auf einem Fundament 10 abgesetzt das Gestell 11 eines Förderbandes 12. Letzteres dient zur Zu- bzw. Abführung von Lagen 13 aus einer Vielzahl von Einzelgegenständen 14.

Fig. 1 zeigt des weiteren im rechten Teil ebenfalls auf dem Fundament 10 abgestellt eine Palette 15 mit insgesamt zehn Lagen 13 aus Einzelgegenständen 14. Die auf der Palette 15 abgesetzten Lagen 13 bilden in ihrer Gesamtheit einen Stapel 16.

Die erfindungsgemäße Vorrichtung dient dazu, aus mittels des Förderbandes 12 zugeführten einzelnen Lagen 13 nacheinander einen Stapel 16 gemäß Darstellung im rechten Teil der Fig. 1 aufzubauen bzw. einen solchen Stapel abzubauen unter Abführung der einzelnen Lagen 13 mittels des Förderbandes 12.

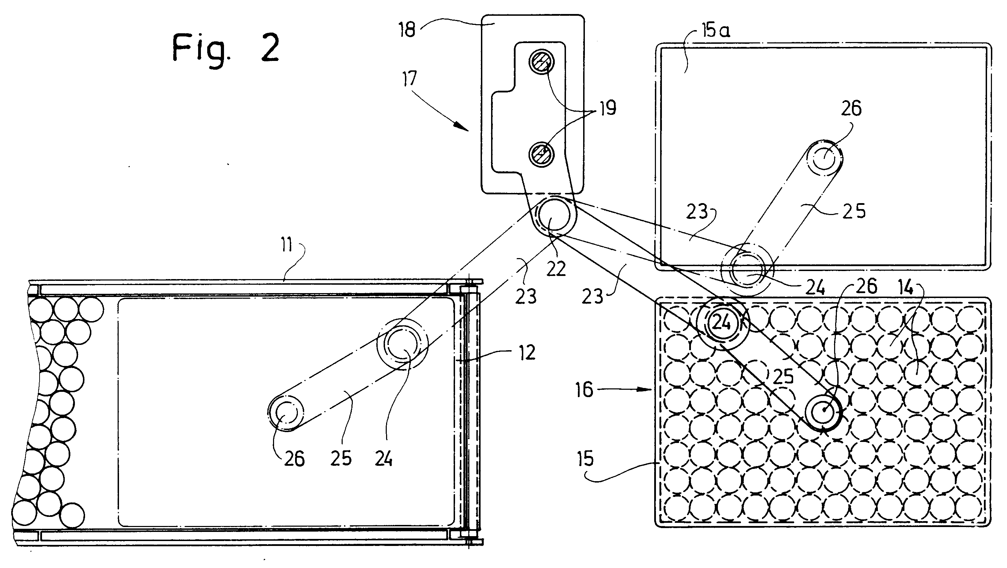

Damit im Augenblick des vollständigen Abbaus bzw. im Augenblick des vollständigen Aufbaus eines Stapels 16 keine Totzeiten bei der Umsetzung der einzelnen Lagen 13 vom Förderband 12 bzw. auf dieses auftreten, sind gemäß Darstellung im rechten Teil der Fig. 2 nahe beieinander zwei Palettenstationen vorgesehen, an deren einer die Palette 15 der Fig. 1 abgestellt ist, während an der anderen Station eine weitere Palette 15 a abgesetzt ist.

Im Bereich zwischen dem Förderband 12 und dem Stapel 16 der Palette 15 (gemäß Fig. 1 und 2) ist eine erfindungsgemäße Vorrichtung, insgesamt mit 17 bezeichnet, angeordnet. Diese Vorrichtung 17 stellt in ihrer Grundausbildung eine übliche Fördervorrichtung zum Anheben, Absenken und Umsetzen von Gegenständen dar und ist mit einem Gestellfuß 18 auf den Fundament 10 abgesetzt bzw. dort befestigt. Vom Gestellfuß 18 erstrecken sich zwei gemäß Fig. 1 hintereinander liegende und in der Draufsicht der Fig. 2 im einzelnen erkennbare Ständersäulen 19 nach oben. Am oberen Ende sind die beiden Ständersäulen in einem Säulenkopf 20 fixiert.

Über nicht dargestellte übliche Antriebsmittel ist an den beiden Ständersäulen 19 eine Hubtraverse 21 auf- bzw. abbewegbar. An dieser Hubtraverse 21 ist über einen Drehzapfen 22 ein erster Schwenkarm 23 gelagert. Dieser Schwenkarm 23 trägt an seinen von der Hubtraverse 21 abgewandten Ende wiederum über einen Drehzapfen 24 schwenkbeweglich gelagert einen zweiten Schwenkarm 25.

An dem dem Drehzapfen 24 gegenüber liegenden Ende des zweiten Schwenkarms 25 ist über einen weiteren Drehzapfen 26 ein Saugkopf 27 schwenkbeweglich gelagert.

Die Mittel zur Schwenkbewegung des Saugkopfs 27 mittels der Schwenkarme 23 und 25 über die Drehzapfen 22, 24 und 26 sind überlicher Art und daher nicht im Detail dargestellt. Die Schwenkbeweglichkeit des Saugkopfs 27 in seiner Gesamtheit ist deutlich aus der Draufsicht der Fig. 2 erkennbar.

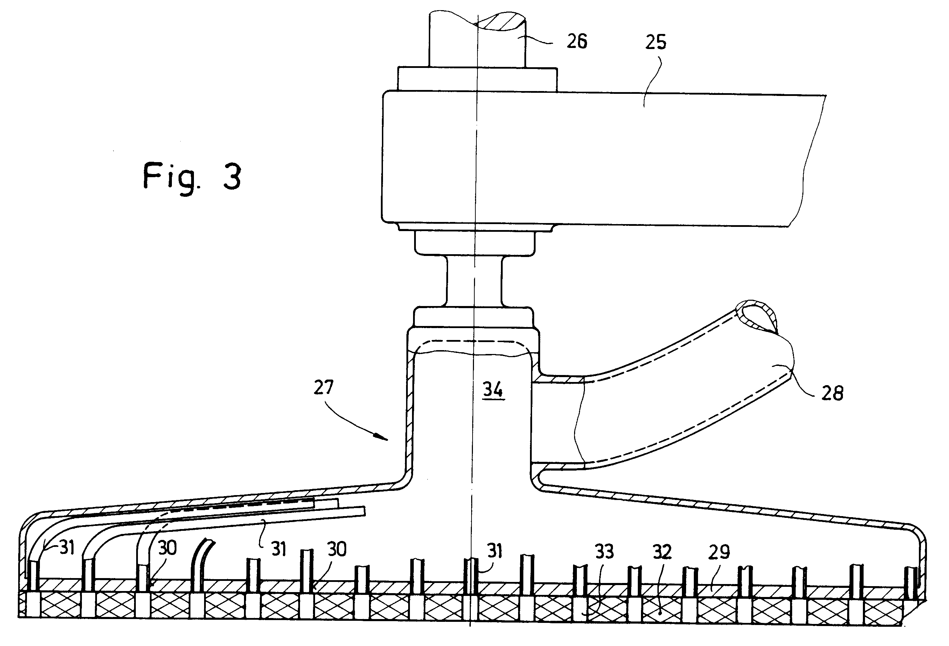

Gemäß Darstellung in Fig. 3 ist der Saugkopf 27 als Hohlkörper ausgebildet, der mittels eines Ansatzes 28 über eine nicht dargestellte Leitung an eine Unterdruckquelle angeschlossen ist. Die Unterseite des Saugkopfs 27 ist als ebene Abschlußwand 29 ausgebildet, in der eine Vielzahl von Saugbohrungen 30 ausgebildet ist, in die jeweils ein als Strömungskanal dienender Schlauch 31 eingesetzt ist. An der Unterseite der Abschlußwand 29 ist eine elastische Polsterschicht 32 angeordnet, die in Fortsetzung der Saugbohrungen 30 ihrerseits entsprechende Bohrungen 33 aufweist. Die Polsterschicht 32 dient dem Ausgleich von Unebenheiten an den Oberseiten der Einzelgegenstände 14, um so an deren Rändern einen luftdichten Abschluß zu gewährleisten, damit die Einzelgegenstände 14 mittels des von der Unterdruckquelle aus zur Einwirkung gebrachten Unterdrucks anhebbar sind.

Der innere Hohlraum des den Saugkopf 27 darstellenden Hohlkörpers bildet eine der Unterdruckquelle nachgeordnete Saugkammer 34, in der praktisch der auf die Unterdruckquelle zurückgehende Unterdruck herrscht. Die in die Saugbohrungen 30 eingesetzten Schläuche 31 liegen innerhalb der Saugkammer 34 und enden dort auch offen, so daß der in der Saugkammer 34 herrschende Unterdruck auch im Inneren der Schläuche 31 und damit in den Saugbohrungen 30 herrscht, so weit es sich um Saugbohrungen handelt, die unterseitig des Saugkopfs 27 bzw. der Polsterschicht 32 der Oberseite eines Einzelgegenstandes 14 zugeordnet sind. Handelt es sich dagegen bei einer Saugbohrung um eine oben als "freie" Saugbohrung 30a bezeichnete Bohrung, nämlich eine solche, die unterseitig des Saugkopfs 27 frei in die Umgebung mündet, der also keine Oberseite eines Einzelgegenstandes 14 zugeordnet ist, so strömt durch diese "freie" Saugbohrung 30a und den zugehörigen Schlauch 31 unter Einwirkung des Unterdrucks Luft von außen in die Saugkammer 34 ein. Durch die enge und lange Ausbildung der Schläuche 31 als Strömungskanal ist die Durchströmung des Schlauchs 31 in hohem Maße widerstandsbehaftet mit der Folge eines erheblichen Druckabfalls. Dies bedeutet, daß der innerhalb der Saugkammer 34 herrschende Unterdruck am freien Ende der "freien" Saugbohrungen 30a nicht in der ursprünglichen Größe herrscht, sondern lediglich erheblich reduziert, bspw. auf die Hälfte der Größe des Unterdrucks innerhalb der Saugkammer 34 reduziert. Dieser starke Druckabfall bewirkt eine entsprechend reduzierte Ansaugung von Luft aus der freien Umgebung in das Innere der Saugkammer 34 und damit in Richtung auf die Unterdruckquelle, so daß mittels letzterer der zur Aufrechterhaltung des zum Anheben der Einzelgegenstände 14 einer Lage 13 erforderliche Unterdruck aufrechterhaltbar ist bei Abführung einer nur verhältnismäßig geringen Luftmenge. Zur Dimensionierung der Schläuche 31 als Strömungskanäle wird auf die oben bereits gemachten Ausführungen verwiesen, wo zweckmäßige Dimensionierungsangaben gemacht worden sind.

An Stelle der Einsteckung der Schläuche 31 in die Saugbohrungen 30 können an der Innenseite der Abschlußwand 29 Ansätze insbesondere in der Form von Nippeln vorgesehen sein, auf die die Schläuche 31 aufsteckbar sind. Die Fixierung der Schläuche 31 an der Abschlußwand 29 bzw. in Fortsetzung der Saugbohrungen 30 sollte stets so ausgeführt sein, daß die Schläuche 31 bzw. etwa an ihrer Stelle vorgesehene Rohre leicht austauschbar sind. Diese Austauschbarkeit dient der Beseitigung eventueller Verstopfungen durch Schmutzpartikel, die über die "freien" Saugbohrungen 30a aus der Umgebung angesaugt werden. Da die Schläuche 31 ausschließlich der Ausbildung eines erheblichen Druckabfalls dienen, müssen diese Schläuche im übrigen keine besonderen Bedingungen erfüllen, so daß bspw. einfachste Kunststoffschläuche verwendbar sind, die im Verstopfungsfall zeit- und kostensparend einfach gegen neue Schläuche ausgetauscht werden. Zur Erleichterung dieser Austauschbarkeit und im übrigen zur erleichterten Anbringung der Schläuche 31 an der Abschlußwand 29 bzw. den Saugbohrungen 30 sollte die Abschlußwand 29 in allerdings nicht dargestellter Weise vom übrigen Teil des Korpus des Saugkopfs 27 demontierbar sein.

Die Vorsehung von Strömungskanälen insbesondere in der Form der dargestellten Schläuche 31 im Anschluß an die Saugbohrungen 30 gewährleistet infolge des bei ihrer Durchströmung auftretenden Druckabfalls eine einwandfreie Einwirkung des auf die Unterdruckquelle zurückgehenden Unterdrucks auf die Oberseiten anzuhebender Einzelgegenstände 14, soweit sich diese im Bereich von Saugbohrungen befinden. Der dort also zur Einwirkung kommende Unterdruck ist nicht, wie infolge "freier" Saugbohrungen 30a an sich zu erwarten wäre, so weit reduziert, daß die zum Anheben der Einzelgegenstände 14 erforderliche Saugkraft nicht mehr in der notwendigen Weise zur Verfügung steht.

## Patentansprüche

1. Vorrichtung zum Fördern von Lagen aus einer Mehrzahl von Einzelgegenständen, insbesondere Gläsern, Dosen, vorzugsweise zum Be- und Entladen von Paletten, wobei zum Aufnehmen einer Lage von Einzelgegenständen ein Saugkopf (27) vorgesehen ist, der eine Vielzahl von Saugbohrungen (30) aufweist, die einerseits der Oberseite der Gegenstände zugewandt und andererseits über Strömungskanäle (31) an eine gemeinsame Saugkammer (34) mit Unterdruckquelle angeschlossen sind, **dadurch gekennzeichnet,** daß sich die Strömungskanäle (31) als Rohre oder Schläuche innerhalb der Saugkammer (34) erstrecken und mit ihren freien Enden in der Saugkammer (34) münden.

2. Vorrichtung nach Anspruch 1, dadurch gekennzeichnet, daß die Strömungskanäle (31) so eng und so lang ausgebildet sind, daß der bei ihrer Durchströmung durch ihre Enge und Länge bewirkte Druckabfall etwa einem bis zwei Drittel, vorzugsweise der Hälfte, des Unterdrucks der Unterdruckquelle bzw. der Saugkammer (34) entspricht.

3. Vorrichtung nach Anspruch 2, dadurch gekennzeichnet, daß die Strömungskanäle (31) einen Innendurchmesser von 2 mm bis 6 mm, vorzugsweise von 4 mm, und eine Länge von 10 cm bis 50 cm, vorzugsweise von 30 cm, aufweisen.

4. Vorrichtung nach einem oder mehreren der Ansprüche 1 bis 3, dadurch gekennzeichnet, daß die Rohre, Schläuche (31) oder dergleichen in die zu ihrer Aufnahme entsprechend erweitert ausgebildeten Saugbohrungen eingesteckt sind.

5. Vorrichtung nach einem oder mehreren der Ansprüche 1 bis 4, dadurch gekennzeichnet, daß die Rohre, Schläuche (31) oder dergleichen auf Ansätze der Saugbohrungen (30) aufgesteckt sind, die auf der von den Einzelgegenständen (14) abgewandten Seite des Saugkopfs (27) vorgesehen sind.

## Claims

1. Device for conveying layers comprising a multitude of individual objects, in particular glasses, cans, etc., preferably for loading and unloading pallets, a suction head (27) being provided for picking up a layer of individual objects, which suction head (27) has a plurality of suction holes (30) which, on the one hand, face the top side of the objects and, on the other hand, are connected via flow ducts (31) to a common suction chamber (34) with a source of negative pressure, characterized in that the flow ducts (31) extend inside the suction chamber (34) as tubes or loses and open with their free ends into the suction chamber (34).

2. Device according to Claim 1, characterized in that the flow ducts (31) are constructed with such narrowness and such length that the pressure drop caused by their narrowness and length when the air flows through approximately corresponds to one to two thirds, preferably half, of the negative pressure of the source of negative pressure or of the suction chamber (34).

3. Device according to Claim 2, characterized in that the flow ducts (31) have an inside diameter of 2 mm to 6 mm, preferably of 4 mm, and a length of 10 cm to 50 cm, preferably of 30 cm.

4. Device according to one or more of claims 1 to 3, characterized in that the tubes, hoses (31) or the like are plugged into the suction holes constructed correspondingly widened for receiving them.

5. Device according to one or more of Claims 1 to 4, characterized in that the tubes, hoses (31) or the like are plugged onto projections of the suction holes (30), which projections are provided on the side of the suction head (27) facing away from the individual objects (14).

## Revendications

1. Dispositif de transport de couches composées d'une pluralité d'objets individuels, en particulier de verres, de boîtes, de préférence pour charger et décharger des palettes, où, pour prendre une couche d'objets individuels est prévue une tête aspirante (27), présentant une pluralité de perçages d'aspiration (30), tournés, d'une part, vers la face supérieure des objets et, d'autre part, raccordés à une chambre d'aspiration (34) commune avec une source de vide, par l'intermédiaire de canaux d'écoulement (31), caractérisé en ce que les canaux d'écoulement (31) s'étendent, sous forme de tubes ou de tuyaux, à l'intérieur de la chambre d'aspiration (34) et débouchent par leurs extrémités libres dans la chambre d'aspiration (34).

2. Dispositif selon la revendication 1, caractérisé en ce que les canaux d'écoulement (31) sont d'une étroitesse et d'une longueur telle que la chute de pression provoquée, lorsqu'ils sont soumis à un écoulement, du fait de leur étroitesse et de leur longueur, correspond à peu près à un à deux tiers, de préférence la moitié, de la dépression de la source de vide ou de la chambre d'aspiration (34).

3. Dispositif selon la revendication 2, caractérisé en ce que les canaux d'écoulement (31) ont un diamètre intérieur de 2 mm à 6 mm, de préférence de 4 mm, et une longueur de 10 cm à 50 cm, de préférence de 30 cm.

4. Dispositif selon l'une ou plusieurs des revendications 1 à 3, caractérisé en ce que les tubes, tuyaux, (31) ou analogues sont enfichés dans les perçages d'aspiration agrandis de façon correspondante pour les loger.

5. Dispositif selon l'une ou plusieurs des revendications 1 à 4, caractérisé en ce que les tubes, tuyaux (31) ou analogues sont enfichés sur des appendices des perçages d'aspiration (30), prévus sur la face, opposée aux objets individuels (14), de la tête aspirante (27).
